(19) **Europäisches Patentamt European Patent Office Office européen des brevets**

(11) **EP 4 668 159 A1**

(12) **EUROPEAN PATENT APPLICATION**

(43) Date of publication:
24.12.2025 Bulletin 2025/52

(51) International Patent Classification (IPC):
*G06N 3/02* (2006.01)     *G06N 3/091* (2023.01)
*G06N 20/00* (2019.01)

(21) Application number: 24183386.2

(22) Date of filing: 20.06.2024

(52) Cooperative Patent Classification (CPC):
**G06N 20/10; G06N 3/02; G06N 3/091; G06N 20/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Robert Bosch GmbH**
**70442 Stuttgart (DE)**

(72) Inventors:
• **Zimmer, Christoph**
**70563 Stuttgart (DE)**
• **Li, Cen-You**
**70565 Stuttgart (DE)**
• **Rakitsch, Barbara**
**70193 Stuttgart (DE)**

Remarks:
Amended claims in accordance with Rule 137(2) EPC.

(54) **DEVICE AND METHOD FOR DETERMINING A MODEL FOR AN UNKNOWN FUNCTION**

(57)     According to various embodiments, a method for determining a model for an unknown function is described comprising training a neural network for selecting inputs at which to evaluate the unknown function, wherein the training comprises a plurality of iterations of sampling, from a set of Gaussian processes, at least one initial guess for the unknown function, using the neural network to select inputs and evaluating the selected inputs using the at least one initial guess, determining a value of an objective function from the evaluated selected inputs, adjusting the neural network to improve the value of the objective function and determining the model by evaluating the unknown function at a sequence of inputs given by the trained neural network and fitting the model to the evaluated inputs.

Fig. 2

EP 4 668 159 A1

**Description**

The present disclosure relates to devices and methods for determining a model for an unknown function.

Active learning (AL) is a sequential learning scheme aiming at reducing the effort and cost of labelling data for training a machine learning model, such as a model modelling the dependency of parameters of a manufactured product from process parameters of a manufacturing process of the product. The goal is to maximize the information given by each data point so the quantity can be reduced. An AL method trains a model with small amount of labelled data, utilizes the trained model to evaluate acquisition scores of unlabelled data (an acquisition function measures the expected knowledge gained from a point if labelled), requests label of data point (or labels of a batch of data points) which has peaked acquisition score, obtains label(s) and retrain the model to proceed for the next data querying. AL can be run for several iterations until the budget is exhausted or until a training goal is achieved. To perform AL, however, one would face multiple challenges: (i) training the models for every query can be untrivial, especially when the learning time is constrained; (ii) acquisition criteria need to be selected a priori but none of them clearly outperforms the others in all cases, which makes the selection difficult; (iii) optimizing an acquisition function can be difficult (e.g. due to sophisticated discrete search spaces).

Accordingly, efficient approaches for active learning to determine a model for an unknown function are desirable.

According to various embodiments, a method for determining a model for an unknown function (by machine learning) is provided, comprising

- Training a neural network for selecting inputs at which to evaluate the unknown function, wherein the training comprises

  ○ a plurality of iterations of

    ▪ sampling, from a set of Gaussian processes, at least one initial guess for the unknown function;
    ▪ using the neural network to select inputs; and
    ▪ evaluating the selected inputs using the at least one initial guess

  ○ determining a value of an objective function from the evaluated selected inputs;
  ○ adjusting the neural network to improve the value of the objective function (i.e. adjust the parameters (in particular weights) of the neural network in direction of increasing objective) and

- determining the model by

  ○ evaluating the unknown function at a sequence of inputs given by the trained neural network and
  ○ fitting the model to the evaluated inputs.

It should be noted that in addition to the "inner" iterations of sampling and evaluating the inputs, there may also be multiple "outer" iterations, i.e. the value of the objective function may be determined multiple times (each time from multiple samplings and evaluations) and each time the neural network may be adjusted to improve the objective. It should further be noted that improving the value of the objective function may mean reducing a loss (if the objective is a loss) or increasing the value of the objective function (in case the value of the objective function is a value that should be increased such as entropy or mutual information of the selected inputs).

The evaluation of the selected inputs using the at least one initial guess may be seen as a simulation since the unknown function is not (in real practical application, e.g. execution of a physical or chemical process) carried out but its result is estimated using the at least one initial guess. The evaluation may include the addition of random noise.

The method described above allows efficiently training a neural network to act as an acquisition function in active learning and thus efficient active learning of an unknown function.

In the following, various examples are given.

Example 1 is a method for determining a model for an unknown function as described above.

Example 2 is the method of example 1, wherein, in each iteration, the neural network selects a sequence of inputs (i.e. the inputs it selects are selected in sequence) wherein it selects each input of the sequence from earlier inputs and observations for the earlier inputs of the sequence.

With knowledge from past points, the neural network may thus be trained to select inputs for additional data points to maximize an information gain objective such as a common entropy or mutual information of the data points. The neural network may for this for example start from an initial set of data points (i.e. pairs of inputs and observations) whose inputs are for example selected by another approach (e.g. uniformly sampled in the input space).

Example 3 is the method of example 1 or 2, wherein the sampling of the initial guess comprises sampling kernel parameters of the Gaussian process and sampling the initial guess from a Gaussian process having the sampled kernel parameters (and a given mean, e.g. zero mean).

This approach provides a rich distribution of initial guesses for the unknown function and thus allows good performance for a wide variety of unknown functions.

Example 4 is the method of any one of examples 1 to 3, wherein the inputs are selected from an input space and the objective function is regularized entropy (of the observations, i.e. the evaluations of the selected inputs) comprising a regularization term, wherein the regularization term is computed on a subset of the input space (e.g. sampled, e.g. a grid of inputs is sampled from the input space) by evaluating inputs from the subset of the input space using the at least one initial guess (i.e. the initial guesses from the multiple iterations, see equations (3) and (5) where an expectation is calculated over multiple samples of initial guesses).

Example 5 is the method of any one of examples 1 to 4, further comprising, in each of the iterations, sampling at least one further initial guess for an unknown further function mapping the inputs to an output parameter for which a (safety) constraint is predefined and determining the value of the objective function by prioritizing inputs for the determination of the objective function for which according to the at least one further initial guess, the constraint is fulfilled (i.e. to select inputs for which according to the at least one further initial guess, the constraint is fulfilled with higher probability than inputs for which according to the at least one further initial guess, the constraint is not fulfilled).

This allows active learning in a setting with safety constraints, e.g. for a process where not all inputs are allowed since this may be risky (e.g. un unsafe temperature). For this, an objective function contribution may be determined per iteration and those contributions may be accumulated over the iterations to form the value of the objective function. Further, for this, the selected inputs may be evaluated using the at least one further initial guess (in addition to evaluating them with the at least one initial guess).

Example 6 is the method of any one of examples 1 to 5, wherein the unknown function specifies a relationship between control parameters of a technical system and output parameters of the technical system (e.g. parameters of a result of a task (e.g. a processing) performed by the technical system) and the method comprises controlling the technical system using the determined model of the unknown function.

Thus, for example, the model may be used to determine inputs (i.e. values of control parameters) to achieve a desired result (e.g. product characteristics).

Example 7 is a data processing device, configured to perform a method of any one of examples 1 to 6.

Example 8 is a computer program comprising instructions which, when executed by a computer, makes the computer perform a method according to any one of examples 1 to 6.

Example 9 is a computer-readable medium comprising instructions which, when executed by a computer, makes the computer perform a method according to any one of examples 1 to 6.

In the drawings, similar reference characters generally refer to the same parts throughout the different views. The drawings are not necessarily to scale, emphasis instead generally being placed upon illustrating the principles of the invention. In the following description, various aspects are described with reference to the following drawings, in which:

Figure 1 shows a system having machinery configured to perform a physical or chemical process.

Figure 2 shows a flow diagram illustrating a method for determining a model for an unknown function.

The following detailed description refers to the accompanying drawings that show, by way of illustration, specific details and aspects of this disclosure in which the invention may be practiced. Other aspects may be utilized, and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples are described in more detail.

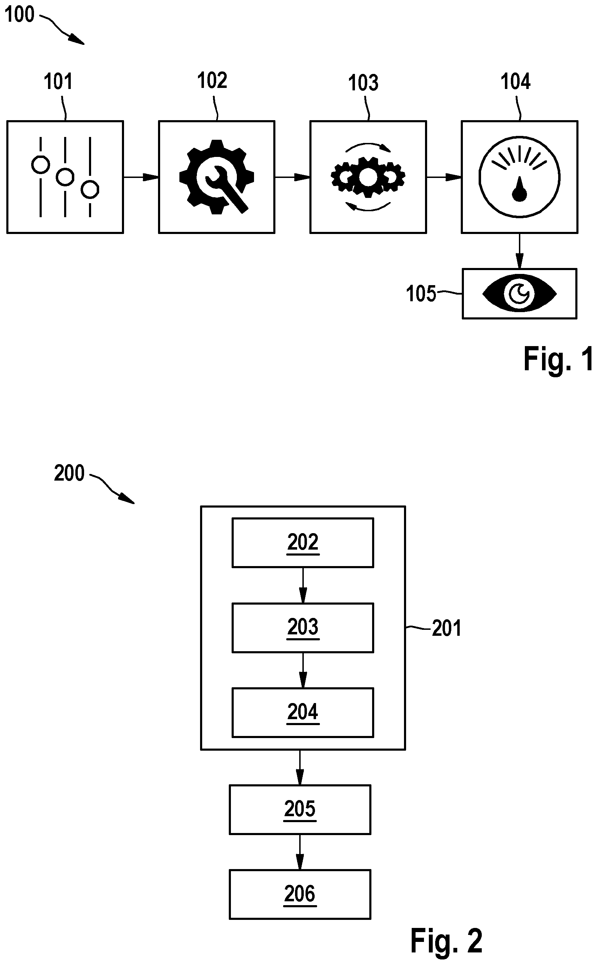

Figure 1 shows a system 100 having machinery (i.e. in general a technical system) 103 configured to perform a physical or chemical process.

The physical or chemical process may be any type of technical process, such as a manufacturing process (e.g., a manufacturing of a product or intermediate product) or a processing of a workpiece.

The system 100 comprises a control device (or "controller") 102. The control device 102 is arranged to control the machinery 103 according to a respective (provided) input parameter value 101 of at least one (i.e. exactly one or more than one) input variable (e.g. temperature, exposure time etc.). An input parameter value 101 is therefore also understood herein to be a vector of values that contains values for several adjustable variables (e.g. process parameters).

Illustratively, the control device 102 can, for example, control an interaction of the machinery 103 with the environment according to the input parameter value 101.

The term "control device" (also referred to as "controller") may be understood as any type of logical implementation unit that may include, for example, a circuit and/or a processor capable of executing software, firmware or a combination thereof stored in a storage medium, and that may issue instructions, for example to a device for executing a process in the present example. For example, the control device can be set up by programme code (e.g. software) to control the operation and/or adjustment (e.g. calibration) of a system, such as a production system, a processing system, a robot, etc to perform a certain (e.g. manufacturing and/or processing) task, in the following also referred to as target task.

An input parameter value, as used herein, may be a parameter value that describes an input variable, such as a physical or chemical quantity, an applied voltage, an opening of a valve, etc. For example, the input parameter may be a process-relevant property of one or more materials, such as hardness, thermal conductivity, electrical conductivity, density, microstructure, macrostructure, chemical composition, etc.

During or after execution of the target task according to the respective input parameter values 101, a result of the task is determined.

For this purpose, the system 100 may, for example, comprise one or more sensors 104. The one or more sensors 104 can be set up to detect a result of the target task, in particular a physical or chemical process. A result of the process may be, for example, a property of a manufactured product or machined workpiece (e.g. a hardness, a strength, a density, a microstructure, a macrostructure, a chemical composition, etc.), a success or failure of a skill (e.g. picking up an object) of a robot, a resolution of an image captured by a camera, etc. The result of the process may be described by means of at least one (i.e., exactly one or more than one) output variable. The one or more sensors 104 can be set up to detect the at least one output variable and thus determine an observation 105 (i.e. an observed result or observed result value). Like the input parameter value, this can be a vector with several components, for example a respective value for each output variable can be recorded by several output variables. Detecting a result of a process (i.e. the target task) by means of one or more sensors as described herein may be performed during the execution of the process (e.g., in-situ) and/or after the execution of the process (e.g., ex-situ).

For choosing the input parameter values (i.e. values of input variables), it is desirable to have a model which describes the relationship between the input parameter values and the values of the output variables, i.e. of the unknown function which maps the input parameter values 101 to the values of the output variables 105. For example, such a model describes the relationship between one or more input variables 101 and at least two output variables 105, wherein a value of one output variable of the at least two output variables may be captured during the process and an output value of the other output variable of the at least two output variables may be captured after or while the process is executed.

As an illustrative example of detecting the output value 105 after the execution of the process, the process may be a hardening of a workpiece in an oven with a temperature as an input variable 101. In this case, the value of the output variable 105 may be a hardness of the workpiece at room temperature after the hardening process. The output variable can have an application-specific quality criterion. The output variable can be a component-related parameter, such as a dimension or layer thickness, or can be a material-related parameter, such as hardness, thermal conductivity, electrical conductivity, density, chemical composition, etc.

An approach to train such a model is active learning (AL). Active learning uses data points which each consist of an input, i.e. one or more input parameter values, and an output (or observation), i.e. values of one or more output variables, as label for the input. The model can then be trained by fitting it to the data points.

Since determining the observation for an input typically requires an experiment (or at least a simulation), like in the example above of a chemical or physical process, it is desirable to be able to train the model with the least number of data points as possible. For this, the inputs need to be chosen in a way that the information gain of the resulting data point for the model is as high as possible. An approach for this is the optimization of an acquisition function.

According to various embodiments, an AL method is provided that suggests new inputs for data points (i.e. for labelling) using a neural network evaluation instead of a costly model training and acquisition function optimization. To this end, model training and acquisition function optimization is decoupled from the AL loop. The following examples consider scenarios where either the querying time (model training time pluses acquisition optimization time) is precious or it is difficult to optimize an acquisition function. In these examples, making a high-quality data (i.e. input) selection is too expensive, such that one would rather accept a faster and easier active learner even with a potential trade-off of slightly worse acquisition quality. In particular, according to various embodiments, a policy function is provided that sees the current labelled dataset (i.e. the data points collected up to the current state of training) and proposes directly the next data point(s) which should be labelled.

Notably, as AL tackles the data scarcity problem, it is desirable that such a policy function is obtained with no additional (real) data (i.e. data from experiments carried out in reality, i.e. using the actual machinery 103). While AL is also relatively prominent for classification, the following examples focus on actively learning regression problems. In particular, in a low data learning problem (up to thousands of data points), Gaussian process is a powerful model family. A GP describes a nonparametric function with well-calibrated predictive distributions which can be naturally inherited for an acquisition function.

According to various embodiments, the policy function is implemented by a neural network (NN) and the AL approach is for example based on (i) generation of a rich distribution of functions (i.e. of initial guesses for the unknown function), (ii) simulation of AL experiments using those functions (i.e. evaluating the inputs using the initial guesses, thus simulating the actual process, i.e. the actual unknown function), (iii) training the policy in simulation (i.e. based on the simulation results), and then (iv) zero-shot generalization to a real AL problem (i.e. using the trained neural network for input selection evaluated using the actual technical system, e.g. machinery 103). In the following examples, GPs are used as a function sampler to help constructing a simulator. In other words, the following embodiments can be seen to provide an amortized inference of an active learner from GP simulations.

For this, in the following, a training pipeline of an active nonparametric function learning policy which requires no real data is described.

As mentioned above, an unknown function $f : \mathcal{X} \rightarrow \mathbb{R}$, where $\mathcal{X} \subseteq \mathbb{R}^D$ should be modelled (this can also be seen as a regression task, e.g. since values of model parameters should be determined). The observations (of the values of the output variables) are noisy. That is, a data point comprises an input $x \in X$ and its corresponding output observation $y(\boldsymbol{x}) = f(\boldsymbol{x})+\varepsilon$, where $f(\boldsymbol{x})$ is a functional value and $\varepsilon$ is an unknown noise value. For brevity, $y := y(\boldsymbol{x})$ and $Ysubscript := y(\boldsymbol{x}_{subscript})$. Let $\mathcal{Y} \subseteq \mathbb{R}$ denote the output space, i.e. $y \in Y$, let $\mathcal{D} \subseteq X \times Y$ denote a dataset (i.e. a set of data points), and $space(X \times Y) := \{\mathcal{D} \mid \mathcal{D} \subseteq X \times Y\}$ denote the space of datasets.

According to an AL setting, it is in the following assumed that an initial small, labelled dataset $\mathcal{D}_0 := \left\{ \boldsymbol{x}_{init,i}, y_{init,i} \right\}_{i=1}^{N_{init}}$ is given, and there is a budget to generate T more data points (i.e. collect data points to generate labels for T inputs $\boldsymbol{x}_1, ..., \boldsymbol{x}_T$). These data points are denoted by $(\boldsymbol{x}_1,y_1, ..., (\boldsymbol{x}_T,y_T)$. The high-level goal is to conduct AL to select informative $\boldsymbol{x}_1, ..., \boldsymbol{x}_T$ such that $\mathcal{D}_T = \mathcal{D}_0 \cup \{\boldsymbol{x}_1,y_1, ..., \boldsymbol{x}_T,y_T\}$ helps constructing a good model of the unknown function f, i.e. fitting a model (e.g. a Gaussian process) with $\mathcal{D}_T = \mathcal{D}_0 \cup \{\boldsymbol{x}_1,y_1, ..., \boldsymbol{x}_T,y_T\}$ of the unknown function. In a conventional AL method, the inputs are selected iteratively by optimizing the acquisition criteria. According to various embodiments, a policy function $\phi : space(X \times Y) \rightarrow X$ is used, which sees current observations (i.e. of the initial data set and the data points collected up to the current training state, i.e. up to index t-1) and directly provides the next query proposal.

Algorithm 1 gives an example of this procedure in pseudo code.

Algorithm 1: AL with NN policy

| Require: $\mathcal{D}_0 \subseteq X \times Y$, AL policy $\phi$ | |
|---|---|
| 1: | for t = 1, ..., T do |
| 2: | $\boldsymbol{x}_t = \phi(\mathcal{D}_{t-1})$ |
| 3: | Evaluate $y_t$ at $\boldsymbol{x}_t$ |
| 4: | $\mathcal{D}_t \leftarrow \mathcal{D}_{t-1} \cup \{\boldsymbol{x}_t,y_t\}$ |
| 5: | end for |
| 6: | Model f with $\mathcal{D}_T$ |

In the following,

$$X_{init} := \left( \boldsymbol{x}_{init,1}, ..., \boldsymbol{x}_{init,N_{init}} \right)$$

$$Y_{init} := \left( y_{init,1}, ..., y_{init,N_{init}} \right)$$

$$X_t := \left( \boldsymbol{x}_{init,1}, ..., \boldsymbol{x}_{init,N_{init}}, \boldsymbol{x}_1, ..., \boldsymbol{x}_t \right)$$

and

$$Y_t := \left( y_{init,1}, \ldots, y_{init,N_{init}}, y_1, \ldots, y_t \right)$$

for t = 1, ..., T.

It is assumed no additional real data are available for the policy training. Nevertheless, it is in the following examples assumed that f has a GP prior $\mathcal{GP}$ (**0**, $k_\theta$) and that the observations are normalized to zero mean and unit variance, and that an observation is the function value blurred by an i.i.d. Gaussian noise, i.e.

$$y = f(x) + \epsilon, \ \epsilon \sim \mathcal{N}(0, \sigma^2).$$

A GP is a distribution over functions, characterized by the mean ( $\mathbb{E}[f(x)]$ ) and kernel (covariance between f(x) and f(x'), for two input points x, x'). Without loss of generality, one usually assumes that the mean is a zero function, which holds true when the observation values are normalized. The kernel function $k_\theta : X \times X$ is parameterized (kernel parameter θ) and it models the amplitude and smoothness of the function f. With normalized observations (unit variance), the kernel scale can be bounded, e.g. $k_\theta(x,x') \leq 1$. Due to a GP prior, any finite number of functional values are jointly Gaussian.

According to various embodiments, a policy $\phi$ to run Algorithm 1 is trained. This is done by exploiting the GP prior before AL experiments. To do this, the GP prior distribution p(f) and the Gaussian likelihood $p(y|x, f) = \mathcal{N}$ (y|f(x),$\sigma^2$) are used to construct a simulator, simulate policy-based AL (algorithm 1) and then an objective function is meta optimized which encodes the acquisition criterion (algorithm 2, see below). The key is to ensure that the policy experiences AL on diverse functions, then during a (real) AL experiment, the policy makes a zero-shot amortized inference from the simulation. It should be noted that the training is performed by simulating active GP learning, while, in a (real) AL experiment, the policy only collects data, and it is according to various embodiments not necessary to perform GP modelling (of the unknown function) with the collected data.

In the following, the (policy) training objectives are discussed and this provides insight into what exact data (i.e. data points) should be simulated. According to one embodiment, the idea can be seen in turning the acquisition criteria which would be optimized in a conventional AL setting into objectives where the learner gradient is available.

In a simulation, functions are always sampled from a known GP prior, i.e. parameters $\theta, \sigma^2$ are known before the start of the simulated AL procedure. Thus, given a sequence of queries provided by a learner (i.e. the policy to be trained), the joint GP distribution is available in closed form. Therefore, an intuitive approach is to apply common entropy or (approximated) mutual information criteria on the policy selected points:

$$\mathcal{H}(\phi) := \mathbb{E}_{p(f(\cdot),\epsilon_{t=1,\ldots,T})} \left[ -\log p(y_{\phi,1}, \ldots, y_{\phi,T}) \right] \tag{1}$$

$$\mathcal{I}(\phi) := \mathbb{E}_{p(f(\cdot),\epsilon_{t=1,\ldots,T})} \left[ -\log p(y_{\phi,1}, \ldots, y_{\phi,T}) + \log p(y_{\phi,1}, \ldots, y_{\phi,T} | y(\cdot \setminus X_\phi)) \right] \tag{2}$$

where f(.) and $\varepsilon_i$=1,...,$T$ are GP and noise realizations, $y_{\phi,1}, \ldots, y_{\phi,T}$ correspond to policy selected queries $x_{\phi,1}, \ldots, x_{\phi,T}$, and y ($\cdot \setminus X_\phi$) means the realization over space $X \setminus \{x_{\phi,1}, \ldots, x_{\phi,T}\}$. In case the input space $X$ is a discrete space of finite number of elements $y(\cdot \setminus X_\phi)$ a computable set of values. It should be noted that conventional Bayesian AL has stochasticity from the model of an unknown function, while in a training simulation, stochasticity arises from the function sampling, but the AL policy is dealing with each function deter-ministically.

Maximizing the entropy objective (equation (1)) would favour a set of uncorrelated points and naturally encourage points at the border which are the most scattered. The entropy objective may be tuned to avoid that it over emphasizes the boundary and ignores exploring in the space. The mutual information criterion tackles this problem (ignoring exploration in the space), at least in conventional AL settings, but, on the other hand, the aforementioned objective of equation (2) in its original form performs conditioning on $y(\cdot \setminus X_\phi)$. This is not well-defined when $X$ is a continuous space. Even if $X$ is discrete, conditioning on a large pool (fine discretization) is computationally heavy, i.e. GP cubic complexity $\mathcal{O}$ ($|X|^3$). A discrete pool also enforces a classifier-like policy $\phi$ (selects points from a pool).

Therefore, according to various embodiments, $\mathcal{I}(\phi)$ is modified. It should be noted that $\mathcal{I}(\phi)$ is a regularized entropy objective, and $\mathcal{H}(\phi)$, although not always well performing, can already be used for training. Therefore, according to various embodiments, the following simple yet effective approach is used: compute the regularization term only on a sparse set of $N_{grid}$ samples $(X_{grid}, Y_{grid}) \in space(X \times Y)$, i.e.

$$\mathcal{I}(\phi) \approx \mathbb{E}_{p(f(\cdot),\epsilon_{t=1,\ldots,T})} \left[ -\log p(y_{\phi,1}, \ldots, y_{\phi,T}) \right.$$
$$\left. + \log p(y_{\phi,1}, \ldots, y_{\phi,T} | Y_{grid}) \right] \qquad (3)$$

$N_{grid}$ should be much larger than T. Maximizing this objective encourages $\{x_{\phi,1}, \ldots, x_{\phi,T}\}$ to track subsets of $X_{grid}$. To avoid the policy from selecting only those sparse grid samples, which are not necessarily optimal points, $X_{grid}$ is resampled in each training step. The intuition of this objective is two-fold: (i) it can be viewed as an entropy objective regularized by an additional search space indicator, or (ii) it can be viewed as an imitation objective because a subset of grid points, if happens to have large joint entropy, maximizes the objective.

The above objectives consider a fixed set of GP hyperparameters, which encodes only certain function features. To generalize to diverse functions, GP hyperparameters are taken into account (and the AL is initiated with the initial data points). The policy objectives thus becomes

$$\mathcal{H}(\phi) = \mathbb{E}_{p(\theta,\sigma^2)} \mathbb{E}_{p(f(\cdot),\epsilon_{t=1,\ldots,T})} \left[ -\log p(y_{\phi,1}, \ldots, y_{\phi,T}, Y_{init}) \right]$$
$$\propto \mathbb{E}_{p(\theta,\sigma^2)} \mathbb{E}_{p(f(\cdot),\epsilon_{t=1,\ldots,T})} \left[ -\log p(y_{\phi,1}, \ldots, y_{\phi,T} | Y_{init}) \right] \qquad (4)$$

$$\mathcal{I}(\phi) \approx \mathbb{E}_{p(\theta,\sigma^2)} \mathbb{E}_{p(f(\cdot),\epsilon_{t=1,\ldots,T})} \left[ -\log p(y_{\phi,1}, \ldots, y_{\phi,T}, Y_{init}) \right.$$
$$\left. + \log p(y_{\phi,1}, \ldots, y_{\phi,T}, Y_{init} | Y_{grid}) \right]$$
$$\propto \mathbb{E}_{p(\theta,\sigma^2)} \mathbb{E}_{p(f(\cdot),\epsilon_{t=1,\ldots,T})} \left[ -\log p(y_{\phi,1}, \ldots, y_{\phi,T} | Y_{init}) \right.$$
$$\left. + \log p(y_{\phi,1}, \ldots, y_{\phi,T} | Y_{init}, Y_{grid}) \right] \qquad (5)$$

The proportion symbol here indicates equivalency, and this holds by applying Bayes rule and removing the part that is not relevant to the policy gradient. $X_{grid}$, $\theta$, $\sigma^2$ are for example sampled uniformly.

The objective functions described above also provide insight into the simulation procedure: sample a GP function realization, sample initial data, perform AL by forwarding with the policy, and maximize either the policy entropy (equation (4)) or the regularized policy entropy (i.e. the modified mutual information, equation (5)).

The (policy) training procedure is summarized in Algorithm 2.

Algorithm 2: Nonmyopic AL training

| | |
|---|---|
| Require: prior $\mathcal{GP}(0, k_\theta), p(\varepsilon) = \mathcal{N} N(0, \sigma^2)$, $T$ | |
| 1: | sample $\theta, \sigma^2$ |
| 2: | sample $f \sim \mathcal{GP}(0, k_\theta)$ |
| 3: | sample $\mathcal{D}_0 \subseteq X \times Y$ |
| 4: | for t = 1, ..., T do |
| 5: | $x_t = \phi(\mathcal{D}_{t-1})$ |
| 6: | sample $\varepsilon_t \sim p(\varepsilon), y_t = f(x_t) + \varepsilon_t$ |
| 7: | $\mathcal{D}_t \leftarrow \mathcal{D}_{t-1} \cup \{x_t, y_t\}$ |

(continued)

| Require: prior $\mathcal{GP}$ $(0, k_\theta), p(\varepsilon) = \mathcal{N}$ $N(0, \sigma^2), T$ | |
|---|---|
| 8: | end for |
| 9: | if entropy objective then |
| 10: | compute objective function value per equation (4) |
| 11: | else if regularized entropy objective then |
| 12: | sample $\boldsymbol{X}_{grid} \subseteq X$ |
| 13: | sample $Y_{grid} = f(\boldsymbol{X}_{grid}) + noise$ |
| 14: | compute objective function value per equation (5) |
| 15: | end if |
| 16: | adjust $\phi$ according to objective (i.e. do backpropagation of objective function value and adjust the neural network parameters (weights) in the direction of increasing objective function value) |

It should be noted that the steps 1-8 are repeated many times to get a good estimate of the expected value. The number of times can be determined up-front (manually) or also automatically with termination criterion for (Monte Carlo) sampling.

It can be seen that lines 4-8 are simulating AL. The only remaining challenge here is to ensure that $Y_{\phi,1}, ..., Y_{\phi,T}$ are from the same (sampled) GP function. This is not trivial because the observations are sampled iteratively, i.e. $\forall t = 1, ..., T, \boldsymbol{x}_t$ $= \phi(\mathcal{D}_{t-1})$, which means $Y_{\phi,1}, ..., y_{\phi,t-1}$ need to be sampled before $\boldsymbol{x}_t, ..., \boldsymbol{x}_T$ are known. One way is to make a standard GP posterior sampling $y_t \sim p(y(\boldsymbol{x}_t)|\mathcal{D}_{t-1}, k_\theta, \sigma^2)$ instead of lines 2 and 6 of algorithm 2. However, this results in

$$\mathcal{O}\left(N_{init}^3 + (N_{init}+1)^3 + ... + (N_{init}+T-1)^3\right)$$ complexity in time, i.e. the notorious GP cubic complexity. Sampling $Y_{grid}$ (line 11 of algorithm 2) would also take tremendous time.

According to various embodiments, this issue is addressed by applying a decoupled function sampling technique: the idea is to sample Fourier features to approximate a GP function. As a result, an approximated function is a linear combination of cosine functions (line 2 of algorithm 2), and the function value at any point $\boldsymbol{x} \in \boldsymbol{X}$ can be computed in linear time (lines 6 and 11 of algorithm 3). One limitation of that approach that arises is that the kernel $k_\theta$ needs to have a Fourier transform (e.g. a stationary kernel needs to be used.

It should be noted that the (policy) training procedure simulates a nonmyopic AL. That is, the T queries are optimized if considered jointly but not necessarily stepwise optimal. A myopic AL training algorithm may also be used which optimizes stepwise data selection. For this, size of the initial dataset is randomly sampled from $N_{init}, ..., N_{init} + T - 1$. The policy queries one point and then the same objectives with the altered sequential structure are calculated. A myopic policy is not expected to have better AL performance but can avoid making recursive NN inference during the training. This might be beneficial if the training should be scaled up to larger $N_{init}$ or T.

Regarding the structure of the neural network (NN) implementing the policy $\phi$, according to one embodiment, each data pair (x, y) is first mapped by a MLP (multilayer perceptron) of the NN to an embedding (e.g. a vector having 32 components), then a transformer encoder block is applied to the sequence of data pair embeddings, and finally the attended sequence is summed before mapped by a decoder (again a MLP) to a new data query. A tanh layer with rescaling constants may be added to refine the decoder output (refine the output to $\boldsymbol{X}$ which is bounded according to various embodiments). The query is in continuous $\boldsymbol{X}$ space and this is how the policy is trained. If an AL problem is considered over discrete $\boldsymbol{X}$, one simple approach is to select the point closest to the NN query.

While the above allows amortized active learning for nonparametric functions, it may be desirable to achieve an amortized safe active learning (AL). The key difference of safe AL (to "standard" AL) is that the data are collected under safety constraint(s). For example, a manufacturing process which is used to get the observation for input data (process parameters) needs to respect a certain temperature constraint.

For example, a system should be modelled, in which the controlling commands (i.e. the input parameters) result in speed and temperature outputs. The speed output is for example the modelling output (observation for the labels) y and temperature output is for example a safety variable z. For example, the space of safety variable can be defined as $\mathcal{Z}$. The temperature constraint may be priori unknown, so a conventional safe AL models the temperature with another GP model.

This safety model allows one to collect data constrained to a safe operational range of the respective technical system.

However, standard AL challenges persist in safe AL (model fitting in every iteration is difficult). In addition, optimizing the acquisition function becomes even more challenging than standard AL, as now a constrained optimization problem needs to be solved for every data point that is collected.

Therefore, according to various embodiments, an amortized safe AL which allows making a very fast and simple data query decision is provided which follows the principles of the approach described above (i.e. the approach described with reference to algorithms 1 and 2): GP priors are used to simulate the safe AL and a policy representing the data selection criterion is trained. Again, the policy is given a rich distribution for the unknown function and now also the safety function, and the policy zero-shot generalizes to a real test problem (see algorithm 3 below).

Algorithm 3: safe AL with policy

| Require: $\mathcal{D}_0 \subseteq X \times Y \times \mathcal{Z}$ , AL policy $\phi$ | |
|---|---|
| 1: | for t = 1, ..., T do |
| 2: | $\boldsymbol{x}_t = \phi(\mathcal{D}_{t-1})$ |
| 3: | Evaluate $Y_t$, $Z_t$ at $\boldsymbol{x}_t$ |
| 4: | $\mathcal{D}_t \leftarrow \mathcal{D}_{t-1} \cup \{\boldsymbol{x}_t, y_t, z_t\}$ |
| 5: | end for |
| 6: | Model f with $\mathcal{D}_T$ |

The neural network modelling $\phi$ can be similar to the one described above, except that the input dimension is increased to include the (observed) safety variables.

Algorithm 4 describes the training.

Algorithm 4: safe AL (GP-based) training

| Require: prior $f \sim \mathcal{GP}(0, k_\theta), p(\varepsilon) = \mathcal{N}(0, \sigma^2)$, $f_s \sim \mathcal{GP}(0, k_{\theta s})$, $p(\epsilon_s) = \mathcal{N}(0, \sigma_s^2)$ , budget T | |
|---|---|
| 1: | sample $\theta, \theta_s, \sigma^2$, $\sigma_s^2$ |
| 2: | sample $f \sim \mathcal{GP}(0, k_\theta)$, $f_s \sim \mathcal{GP}(0, k_{\theta s})$ |
| 3: | sample $\mathcal{D}_0 \subseteq X \times Y \times Z$ |
| 4: | for t = 1, ..., T do |
| 5: | $\boldsymbol{x}_t = \phi(\mathcal{D}_{t-1})$ |
| 6: | sample $\varepsilon_t \sim p(\varepsilon), y_t = f(\boldsymbol{x}_t) + \varepsilon_t$ |
| 7: | sample $\varepsilon_{s,t} \sim p(\varepsilon_s)$, $z_t = f_s(\boldsymbol{x}_t) + \varepsilon_z$ |
| 8: | $\mathcal{D}_t \leftarrow \mathcal{D}_{t-1} \cup \{\boldsymbol{x}_t, y_t, z_t\}$ |
| 9: | end for |
| 10: | sample $\boldsymbol{X}_{grid} \subseteq X$, $Y_{grid} = f(\boldsymbol{X}_{grid})$ + noise s.t. $Z_{grid} = f_s(\boldsymbol{X}_{grid}) + noise \subseteq \mathbb{R}^+$ |
| 11: | compute objective function value per equation (5) |
| 12: | adjust $\phi$ according to (total) objective function value (i.e. do backpropagation of the objective function value and adjust the neural network parameters (weights) in the direction of increasing objective function value) |

In comparison to algorithm 2 for the standard AL given above, the training process now has another function $f_s$ simulating safety function (i.e. the relation between input variable(s) and safety variable(s)).

The objective function is now $\mathcal{I}(\phi) + S(\phi)$ or $\mathcal{H}(\phi) + S(\phi)$ with $\mathcal{I}(\phi)$ is the objective according to equation (5) and $\mathcal{H}(\phi)$ according to equation (4), which encode the AL exploration objectives, and <S is a safe objective function (e.g. loss) wrapper. By maximizing $\mathcal{I}(\phi) + S(\phi)$ or $\mathcal{H}(\phi) + \mathcal{S}(\phi)$, the policy should learn to select data with good exploration score within safety domain.

The safe objective wrapper $\mathcal{S}(\phi)$ can be for example

$$\mathbb{E}_{p(k_{\theta_s}, \sigma_s^2)} \mathbb{E}_{p(z(\cdot))} \left[ \sum_t \log p(Z_t \geq 0 | Z_{1:t-1}) \right]$$

, which means that the joint safety probability of all policy selected points is maximized. The predictive safe probability is computed with the GPs sampled in algorithm (4). In another example, the safe objective wrapper $\mathcal{S}(\phi)$ can be

$$\mathbb{E}_{p(k_{\theta_s}, \sigma_s^2)} \mathbb{E}_{p(z(\cdot))} \left[ -\sum_t \log p(Z_t < 0 | Z_{1:t-1}) \right]$$

, which is the negative unsafe log probability of all policy selected points. Maximizing this term is minimizing unsafe probability.

In summary, according to various embodiments, a method is provided as illustrated in figure 2.

Figure 2 shows a flow diagram 200 illustrating a method for determining a model for an unknown function.

In 201, a neural network for selecting inputs at which to evaluate the unknown function is trained by

- in 202, a plurality of iterations of

    ◦ sampling, from a set of Gaussian processes, at least one initial guess for the unknown function
    ◦ using the neural network to select inputs and
    ◦ evaluating the selected inputs using the at least one initial guess

- in 203 determining a value of an objective function from the evaluated selected inputs; and
- in 204 adjusting the neural network to improve the value of the objective function (i.e. adjust the parameters (in particular weights) of the neural network in direction of increasing objective).

The model is then determined by

- in 205 evaluating the unknown function at a sequence of inputs given by the trained neural network (this may involve actual experiments, i.e. feeding the sequence of inputs to an actual technical system (e.g. machinery) and
- in 206 fitting the model to the evaluated inputs.

The approach of figure 2 can be used to model an unknown function, in particular between input parameters (e.g. control parameters) and output (or result) parameters of a technical system. It may thus be used to determine a control signal (e.g. given a desired output or result) of the technical system, e.g. a computer-controlled machine or arrangement to perform a physical or chemical process, including for example a robot (or arrangement of robots) etc.

To determine the observations, various sensors may be used such as video, radar, LiDAR, ultrasonic, thermal imaging, motion, sonar, pressure, temperature etc.

The method of Figure 2 may be performed by one or more data processing devices (e.g. computers or microcontrollers) having one or more data processing units. The term "data processing unit" may be understood to mean any type of entity that enables the processing of data or signals. For example, the data or signals may be handled according to at least one (i.e., one or more than one) specific function performed by the data processing unit. A data processing unit may include or be formed from an analog circuit, a digital circuit, a logic circuit, a microprocessor, a microcontroller, a central processing unit (CPU), a graphics processing unit (GPU), a digital signal processor (DSP), a field programmable gate array (FPGA), or any combination thereof. Any other means for implementing the respective functions described in more detail herein may also be understood to include a data processing unit or logic circuitry. One or more of the method steps described in more detail herein may be performed (e.g., implemented) by a data processing unit through one or more specific functions performed by the data processing unit.

Accordingly, according to one embodiment, the method is computer-implemented.

**Claims**

1. A method for determining a model for an unknown function, comprising:

   Training (201) a neural network for selecting inputs (101) at which to evaluate the unknown function, wherein the training comprises

   a plurality of iterations (202) of

   sampling, from a set of Gaussian processes, at least one initial guess for the unknown function;
   using the neural network to select inputs (101);
   evaluating the selected inputs (101) using the at least one initial guess

   determining (203) a value of an objective function from the evaluated selected inputs (101);
   adjusting (204) the neural network to improve the value of the objective function; and

   determining the model by evaluating (205) the unknown function at a sequence of inputs (101) given by the trained neural network; and
   fitting (206) the model to the evaluated inputs (101).

2. The method of claim 1, wherein, in each iteration, the neural network selects a sequence of inputs (101) wherein it selects each input (101) of the sequence from earlier inputs (101) and observations for the earlier inputs (101) of the sequence of inputs (101).

3. The method of claim 1 or 2, wherein the sampling of the initial guess comprises sampling kernel parameters of the Gaussian process and sampling the initial guess from a Gaussian process having the sampled kernel parameters.

4. The method of any one of claims 1 to 3, wherein the inputs (101) are selected from an input space and the objective function is regularized entropy comprising a regularization term, wherein the regularization term is computed on a subset of the input space by evaluating inputs from the subset of the input space using the at least one initial guess.

5. The method of any one of claims 1 to 4, further comprising, in each of the iterations, sampling at least one further initial guess for an unknown further function mapping the inputs (101) to an output parameter (105) for which a constraint is predefined and determining the value of the objective function by prioritizing inputs (101) for the determination of the objective function for which according to the at least one further initial guess, the constraint is fulfilled.

6. The method of any one of claims 1 to 5, wherein the unknown function specifies a relationship between control parameters of a technical system (103) and output parameters (105) of the technical system (103) and the method comprises controlling the technical system (103) using the determined model of the unknown function.

7. A data processing device (102), configured to perform a method of any one of claims 1 to 6.

8. A computer program comprising instructions which, when executed by a computer, makes the computer perform a method according to any one of claims 1 to 6.

9. A computer-readable medium comprising instructions which, when executed by a computer, makes the computer perform a method according to any one of claims 1 to 6.

**Amended claims in accordance with Rule 137(2) EPC.**

1. A method for determining a model for an unknown function, comprising:

   Training (201) a neural network for selecting inputs (101) at which to evaluate the unknown function, wherein the training comprises
   a plurality of iterations (202) of
   sampling, from a set of Gaussian processes, at least one initial guess for the unknown function;
   sampling at least one further initial guess for an unknown further function mapping the inputs (101) to an output parameter (105) for which a constraint is predefined;

using the neural network to select inputs (101), wherein the neural network is supplied with input data including one or more inputs at which the unknown function has been evaluated initially or in a previous iteration ; evaluating the selected inputs (101) using the at least one initial guess determining (203) a value of an objective function from the evaluated selected inputs (101) wherein for the determination of the objective function inputs (101) are prioritized for which according to the at least one further initial guess, the constraint is fulfilled; adjusting (204) the neural network to improve the value of the objective function; and determining the model by evaluating (205) the unknown function at a sequence of inputs (101) given by the trained neural network; and fitting (206) the model to the evaluated inputs (101).

2. The method of claim 1, wherein, in each iteration, the neural network selects a sequence of inputs (101) wherein it selects each input (101) of the sequence from earlier inputs (101) and observations for the earlier inputs (101) of the sequence of inputs (101).

3. The method of claim 1 or 2, wherein the sampling of the initial guess comprises sampling kernel parameters of the Gaussian process and sampling the initial guess from a Gaussian process having the sampled kernel parameters.

4. The method of any one of claims 1 to 3, wherein the inputs (101) are selected from an input space and the objective function is regularized entropy comprising a regularization term, wherein the regularization term is computed on a subset of the input space by evaluating inputs from the subset of the input space using the at least one initial guess.

5. The method of any one of claims 1 to 4, wherein the unknown function specifies a relationship between control parameters of a technical system (103) and output parameters (105) of the technical system (103) and the method comprises controlling the technical system (103) using the determined model of the unknown function.

6. A data processing device (102), configured to perform a method of any one of claims 1 to 5.

7. A computer program comprising instructions which, when executed by a computer, makes the computer perform a method according to any one of claims 1 to 5.

8. A computer-readable medium comprising instructions which, when executed by a computer, makes the computer perform a method according to any one of claims 1 to 5.

100

101          102          103          104

105

**Fig. 1**

200

202

203                    201

204

205

206

**Fig. 2**

Europäisches
Patentamt
European
Patent Office
Office européen
des brevets

# EUROPEAN SEARCH REPORT

**Application Number**

EP 24 18 3386

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Chen Yutian ET AL: "Learning to Learn without Gradient Descent by Gradient Descent", , 12 June 2017 (2017-06-12), XP093232084, Retrieved from the Internet: URL:https://arxiv.org/pdf/1611.03824v6 * page 2; figures 1,6 * * * | 1-9 | INV. G06N3/02 G06N3/091 G06N20/00 |
| A | Robert (munro) Monarch: "Uncertainty Sampling Cheatsheet. A quick reference for four common... \| by Robert (Munro) Monarch \| Towards Data Science", , 29 July 2019 (2019-07-29), XP093232048, Retrieved from the Internet: URL:https://towardsdatascience.com/uncertainty-sampling-cheatsheet-ec57bc067c0b * page 1 * | 1-9 | |
| A | Anonymous: "Control theory - Wikipedia", , 7 June 2024 (2024-06-07), XP093232076, Retrieved from the Internet: URL:https://en.wikipedia.org/w/index.php?title=Control_theory&oldid=1227793595 * page 1 * | 1-9 | TECHNICAL FIELDS SEARCHED (IPC)  G06N |

The present search report has been drawn up for all claims

| Place of search | Date of completion of the search | Examiner |
|---|---|---|
| Munich | 6 December 2024 | Thielemann, Benedikt |

EPO FORM 1503 03.82 (P04C01)